# EUROPEAN PATENT SPECIFICATION

(11) **EP 3 175 294 B1**
(45) Date of publication and mention of the grant of the patent: **22.09.2021**
(21) Application number: 14899038.5
(22) Date of filing: 31.07.2014
(51) Int. Cl.: G03B 21/20, F21S 2/00, G06F 3/042, G03B 17/54, G03B 15/05, F21V 23/04, F21V 33/00

(54) **WHITE FLASH GENERATION FROM A LIGHT EMITTING DIODE (LED) PROJECTOR**
WEISSBLITZERZEUGUNG AUS EINEM LEUCHTDIODEN (LED)-PROJEKTOR
GÉNÉRATION DE FLASH BLANC À PARTIR D'UN PROJECTEUR À DIODES ÉLECTROLUMINESCENTES (LED)

(43) Date of publication of application: 07.06.2017
(73) Proprietor: Hewlett-Packard Development Company, L.P., Spring TX 77389 (US)
(72) Inventor: MUELLER, Robert L., San Diego, California 92127-1899 (US); CHOUSAL, Ivan Dejesus, San Diego, California 92127-1899 (US); WYNNE, Ben, San Diego, California 92127-1899 (US)
(74) Representative: Haseltine Lake Kempner LLP
(86) International application number: PCT/US2014/049172
(87) International publication number: WO 2016/018372

(56) References cited:
- EP-A1- 1 793 588
- WO-A1-2014/092272
- JP-A- 2004 070 298
- JP-A- 2006 340 000
- US-A1- 2007 195 173
- US-A1- 2009 027 570
- US-A1- 2009 239 589
- US-A1- 2012 320 157
- US-A1- 2014 176 735
- None

## Description

### BACKGROUND

Illumination systems are used in different applications, including projection display systems, backlights for liquid crystal displays and the like. Projection systems generally use one or more known white light sources, such as high pressure mercury lamps. A white light beam emitted by the white light sources is usually split into three primary color beams, red, green, and blue, and is directed to respective image forming spatial light modulators to produce an image for each primary color. The resulting primary-color image beams are combined and projected onto a projection screen for viewing. More recently, light emitting diodes (LEDs) have been increasingly used as an alternative to the white light sources. Conventional projectors used for image projection as well as for white light generation during image capturing are known from EP1793588A, US2009/027570A, US2014/176735A and US2012/320157A.

### BRIEF DESCRIPTION OF DRAWINGS

The detailed description is provided with reference to the accompanying figures. In the figures, the left-most digit(s) of a reference number identifies the figure in which the reference number first appears. The same numbers are used throughout the drawings to reference like features and components.
Fig. 1(a) illustrates a perspective view of an example projection system, including a LED projector, according to an example of the present subject matter;
Fig. 1(b) illustrates another perspective view of the example projection system including the LED projector, according to an example of the present subject matter;
Fig. 2 illustrates an example schematic view of components of an LED projector, according to an example of the present subject matter;
Fig. 3 graphically illustrates operation of the LED projector for generation of white Flash, according to an example of the present subject matter; and
Fig. 4 illustrates a method for generating white flash from the LED projector, according to an example of the present subject matter.

### DETAILED DESCRIPTION

The present subject matter relates to systems and methods for generation of white flash from a Light Emitting Diode (LED) projector. In general, LED projectors employ a red LED, a green LED, and a blue LED to generate light. However, when the LEDs are driven for a long time, temperatures of the LEDs increase, which causes a reduction in levels of lights emitted from the LEDs. Therefore, the LEDs are generally driven in a sequential pattern such that the intensity of light is not affected and the temperature of the LEDs can also be controlled.

With the advent of technology, LED projectors now being developed are relatively compact and can provide power efficient projection engines which can be easily integrated with computing systems like an all-in-one computer. In some situations, the LED projectors associated with the computing systems may also be used as an illumination source while capturing images or making videos. For example, to capture an image from a web camera of an all-in-one computer, the LED projector associated with the all-in-one computer may be utilized as an illuminating source. More often than not, the use of the LED projector as the illuminating source causes a rainbow or gray scale beating artifact to be introduced into the images and the videos. The introduction of such artifacts into the images and videos can generally be attributed to the sequential lighting of different red, green, and blue colored LEDs in the LED projectors.

According to an example of the present subject matter, systems and methods for generation of white flash from a LED projector are described. The described systems and methods, on one hand, may eliminate any introduction of rainbow or gray scale artifacts in images and videos captured by an image capturing device while utilizing the LED projector as an illumination source; on the other, may provide cost effective ways of generating white flash through the existing LED projector.

The described systems and methods may be implemented in various LED projectors coupled with computing systems. Such arrangements where the LED projectors are coupled with computing systems have been described as projection systems, hereinafter. Also, the term "couple", "couples", or "coupled" is intended to mean either an indirect or direct connection. Thus, if a first device couples to a second device, that connection may be through a direct electrical or mechanical connection, through an indirect electrical or mechanical connection via other devices and connections, through an optical electrical connection, or through a wireless electrical connection. Various implementations of the present subject matter have been described below by referring to several examples.

In an example of the present subject matter, a LED projector coupled with a computing system may generate white flash, such as that of a flashlight, to avoid introduction of any gray scale or rainbow artifact into an image or video. The LED projector associated with the computing system may either be an integrated LED projector, or may be an external LED projector, capable of being coupled with the computing system.

In operation, the LED projector of the present subject matter may operate in one or more projection modes. A projection mode may be understood as a configuration of the LED projector used for projection of data. From amongst the one or more projection modes, in one of the projection modes, the LED projector may generate the white flash. For the sake of explanation, the projection mode in which the LED projector may generate the white flash is referred to as white-light mode, hereinafter.

In one example of the present subject matter, the LED projector may receive an input, such as from the computing system to which the LED projector is coupled to, or from a user, to switch from one of the projection modes to the white-light mode. In one example, the input received by the computing system may also be based on a trigger received from a user, such as a press of a button or a gesture by the user. For the sake of explanation, it may be considered that the LED projector to be operating on a first projection mode. In said example, the LED projector switches from the first projection mode to the white-light projection mode.

In the white-light mode, the LED projector generates instantaneous white flash, such that of a flashlight based on actuation of all the LEDs of the LED projector. In other words, the LEDs of the LED projector may not be operated in a sequential manner and are simultaneously actuated to produce white flash. The simultaneous actuation of the LEDs generates instantaneous white flash which may not cause any gray scale or rainbow artifact in images and videos being captured by the image capturing device.

In one example, the white flash thus generated in the white-light mode, may generate an increased illuminance, such as about 50% higher or about 80% higher, than the usual illuminance generated by the LED projector. The increase in illuminance during the white-light mode may further assist the image capturing device in capturing better images with increased visibility and better light exposure.

In the white-light mode, the LED projector may generate the white flash for a predetermined time period. In one example, the LED projector may also generate strobes of white flash during the white-light mode. The duration of strobes and the pattern of strobes may be configured based on predefined strobe parameters. Therefore, the LED projector, in the white-light mode, may generate instantaneous white flash for illumination of objects and articles. This may allow eliminate possibilities of occurrence of rainbow or gray scale artifacts while capturing image data of the objects and articles illuminated by the LED projector. The implementation of the described techniques may also eliminate use of an external flashlight which may be expensive and cause hassle while integrating with either the computing system, or the image capturing device.

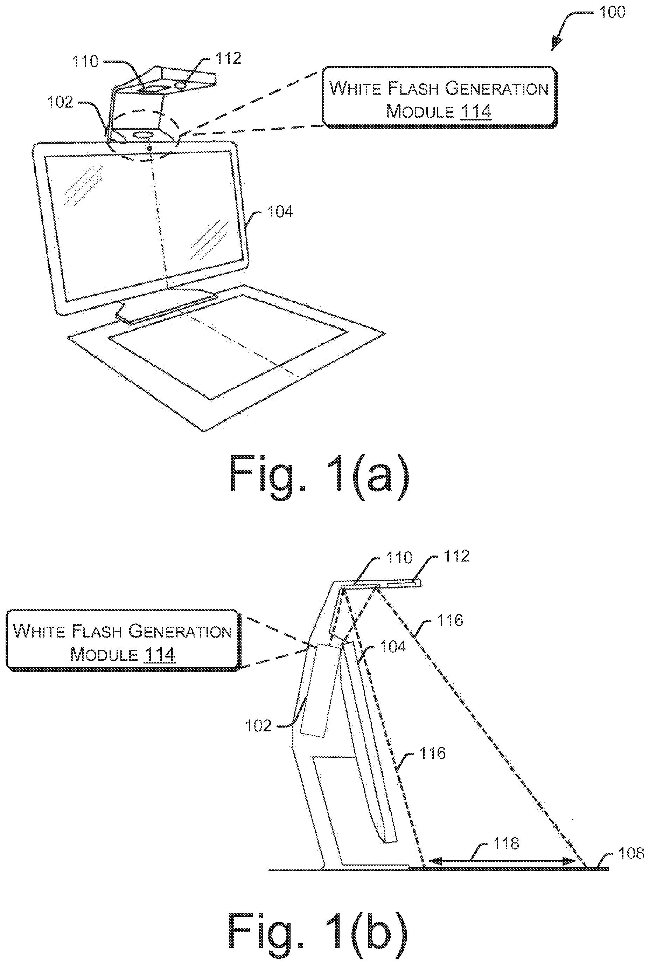

The above mentioned systems and methods are further described with reference to Fig. 1 to Fig. 4. It should be noted that the description and figures merely illustrate the principles of the present subject matter along with examples described herein and, should not be construed as a limitation to the present subject matter. It is thus understood that various arrangements may be devised that, although not explicitly described or shown herein, embody the principles of the present subject matter. The invention is defined by the appended claims.

Fig. 1(a) and 1(b) illustrates perspective views of a projection system 100 including an LED projector 102, according to an example of the present subject matter. For the sake of explanation, the description of Fig. 1(a) and Fig. 1(b) has provided been simultaneously. The projection system 100 may include a computing system 104 associated with the LED projector 102.

The computing system 104 may comprise any suitable computing system capable of implementing the principles disclosed herein. For instance, in some examples, the computing system 104 may comprise an electronic display, a Smartphone, a tablet, an all-in-one computer (i.e., a display that also houses the computer's board), or combinations thereof.

In Fig. 1(a) and 1(b), the computing system 104 may be an all-in-one computer that includes a display to project images for viewing and interaction by a user (not shown). In some examples, the display of the computing system 104 may include touch sensitive displays, such as resistive displays, capacitive displays, acoustic wave displays, infrared (IR) displays, strain gauge displays, optical displays, acoustic pulse recognition displays, and combinations thereof. Therefore, throughout the following description, the display may periodically be referred to as a touch sensitive surface or touch display.

The LED projector 102 is coupled with the computing system 104 such that the LED projector 102 may project data, such as images and videos onto a surface 108. In one example of the present subject matter, the LED projector 102 may be mounted behind the computing system 104. The LED projector 104 may be mounted either on the display of the computing system 104, or may be mounted behind the display through one or more supporting structures and fastening mechanisms (not shown), which may vary based on the configuration of the LED projector 102 and the place of mount on the computing system 104.

Although the LED projector 102 has been shown to be mounted behind the display of the computing system 104, it would be noted that the LED projector 102 may be coupled with the computing device 104 in other configurations as well.

The LED Projector 102 may comprise any suitable digital LED projector assembly for receiving data from a computing system, such as the computing system 104 and project an image or images onto the surface 108. The LED projector 102 may include compact and power efficient projection engines capable of multiple display resolutions and sizes, such as standard XGA (1024 x 768) resolution 4:3 aspect ratio or standard WXGA (1280 x 800) resolution 16:10 aspect ratio.

The LED projector 102 may further be communicatively coupled to the computing system 104 in order to receive data and generate light and images on the surface 108 during operation. The LED projector 102 may be communicatively coupled to the computing system 104 through any suitable coupling known. For example, in some implementations, the LED projector 102 may be communicatively coupled to the computing system 104 through an electric conductor, a WI-FI connection, a BLUETOOTH® connection, an optical connection, an ultrasonic connection, or any combination thereof. In an example of the present subject matter, the LED projector 102 may be electrically coupled to the computing system 104 through electrical leads or conductors that may be disposed within the computing system 104.

The surface 108 onto which the LED projector 102 may project images and data may either comprise of a passive projection surface, or may include an active projection surface, such as a touch sensitive surface. The passive projection surface may include, but not limited to, a high contrast grey projection surface, a matt white projection surface, an optical projection surface, a high gain projection surface, an acrylic projection surface, and an acoustically transparent projection surface.

In case the surface 108 is an active projection surface, such as the touch sensitive surface, it may allow detection and tracking of one or multiple touch inputs of a user in order to allow the user to interact with the computing system 104, or some other computing system (not shown). For example, in some implementations, the surface 108 may utilize touch sensitive technologies, like, resistive, capacitive, acoustic wave, infrared, strain gauge, optical, acoustic pulse recognition, or combinations thereof. In addition, it would be noted that the active projection surface may be communicatively coupled to the computing system 104 such that user inputs received by the surface 108 are communicated to the computing system 104. Any suitable wireless or wired coupling or connection may be used between the surface 108 and the computing system 104, such as WI-FI, BLUETOOTH®, ultrasonic, electrical cables, electrical leads, electrical spring-loaded pogo pins with magnetic holding force, or any combination thereof.

Although it has been shown that the LED projector 102 may project images and data onto a horizontal surface, such as the surface 108, it would be noted that the LED projector 102 may also project the images and data onto surfaces in other orientations as well, such as vertical surfaces and slanted surfaces.

Further, to project the images and data by the LED projector 102, the projection system 100 may further include a reflective surface 110. The reflective surface 110 may be positioned to reflect images and/or light projected by the LED projector 102 toward the surface 108 during operation. The reflective surface 110 may comprise any suitable type of mirror or reflective surface to reflect light for projection onto the surface 108. In an example, the reflective surface 110 may be a complex aspherical curvature to act as a reflective lens element to provide additional focusing power or optical correction to the LED projector 102.

The projection system 100 includes an image capturing device 112, such as a camera to capture images and videos of objects placed on the surface 108. The projection system 100 may also include other sensors, such as proximity sensor, and light sensor, along with the image capturing device 112. However, such sensors have not been shown in the figure for the sake of brevity and ease of explanation.

The image capturing device 112, in examples of the present subject matter may comprise a camera which may be arranged to take either a still image or a video of an object and/or document disposed on the surface 108. The image capturing device 112 may also be a single infrared (IR) camera, or a dual IR camera for capturing images and videos in low light situations.

In operation, the LED projector 102 may generate and emit light that may be reflected off of the reflective surface 110 towards the surface 108, thereby displaying an image. The LED projector 102 may operate in different projection modes to project images videos and data onto the surface 108. Each projection mode may include different configuration of the LED projector to project light in a predetermined manner, onto the surface 108. For example, the LED projector 102 may include a presentation mode where the projection of images may be made in a standard XGA (1024 x 768) resolution with a 4:3 aspect ratio. Similarly, the LED projector 102 may also include a movie projection mode where the projection of videos may be made in a standard WXGA (1280 x 800) resolution with a 16:10 aspect ratio. The LED projector 102 generates white flash in a white-light mode of projection. To this end, the LED projector 102 includes a white flash generation module 114. The white flash generation module 114 may detect an input from the user to switch the LED from any one of the projection modes, to the white-light mode of projection. In the white-light mode, the white flash generation module 114 actuates all the LEDs of the LED projector 102 simultaneously to generate a white flash.

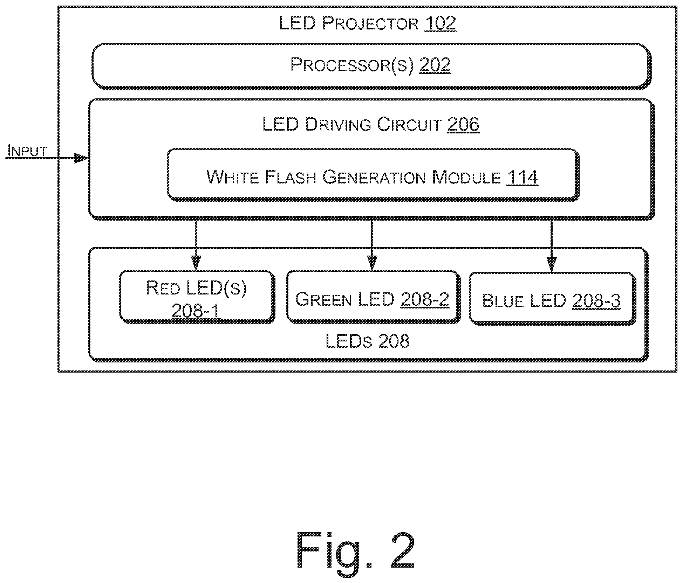

While referring to Fig. 1(b), in the white-light mode of projection, the LED projector 102 may generate white flash and emit white light 116 onto the surface 108. The generation of the white flash may illuminate section 118 of the surface 108. Accordingly, any article placed onto the surface 108 would be illuminated and correspondingly an artifact free image can be captured by the image capturing device 112. The description of the functioning of the LED projector 102 in the white-light mode of projection has been further explained in detail in reference to Fig. 2. Further, the components of the LED projector 102 to allow generation of the white flash are also further described in reference to Fig. 2.

Fig. 2 depicts the components of the LED projector 102 to generate white flash in a white-light mode. In one example implementation of the present subject matter, the LED projector 102 may include processor(s) 202. The processor(s) 202 may be implemented as microprocessor(s), microcomputer(s), microcontroller(s), digital signal processor(s), central processing unit(s), state machine(s), logic circuit(s), and/or any device(s) that manipulates signals based on operational instructions. Among other capabilities, the processor(s) 202 may fetch and execute computer-readable instructions stored in a memory.

The functions of the various elements shown in the figure, including any functional blocks labeled as "processor(s)", may be provided through the use of dedicated hardware as well as hardware capable of executing machine readable instructions. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing instructions, and may implicitly include, without limitation, digital signal processor (DSP) hardware, network processor, application specific integrated circuit (ASIC), field programmable gate array (FPGA), read only memory (ROM) for storing instructions, random access memory (RAM), non-volatile storage.

The LED projector 102 may also include I/O interface(s) (not shown), for example, interfaces to connect to different devices, such as the computing system 104, other I/O devices, storage devices, and network devices. The interface(s) may include Universal Serial Bus (USB) ports, WI-FI ports, host bus adaptors, etc., and their corresponding device drivers. Accordingly, the interface(s) may facilitate the communication of data between the LED projector 102 and the other devices.

The LED projector 102 may further include a LED driving circuit 206 to control and drive one or more LEDs 208. The LEDs 208 include one or more red LEDs 208-1, one or more green LEDs 208-2, and one or more blue LEDs 208-3. The LEDs 208 may include, but not limited to, miniature LEDs, such as single die LEDs, high power LEDs, and application specific LEDs (AS-LEDs). The LED driving circuit 206 may operate and control the LEDs 208 to project image and data onto the surface 108.

In one example implementation of the present subject matter, the LED projector 102 may generate white flash to generate instantaneous white light. The white flash generation module 114 may switch the LED projector 102 from any mode of projection to the white-light mode of projection. The switching is based on an input received by the LED projector 102.

The input may either be directly received from the user of the projection system 100 through a dedicated input switch, or may be received from the computing system 104 coupled with the LED projector 102. In operation, while the LED projector 102 is operating in any of the projection modes, the user may wish to capture an image of either the surface 108, or of an object placed on the surface 108. In such situations, the user may press the dedicated switch to provide the input to the LED projector 102.

In another example of the present subject matter, user may make a gesture which may be recognized by the computing system 104. The gesture may either be made on the surface 108 which may be a touch sensitive surface, or the gesture may be made anywhere within the section 118 for recognition by one or more sensors of the computing system 104. Based on identification of the gesture made by the user, the computing system 104 may generate the input to be provided to the LED projector 102.

Upon receiving the input, the white flash generation module 114 switches the projection mode of the LED projector 102 to the white-light projection mode, such that the LED projector 102 may generate and emit instantaneous white light.

While the LED projector 102 is switched to the white-light mode of projection, the white flash generation module 114 actuates all the LEDs 208, simultaneously. That is, the white flash generation module 114 simultaneously provides driving signal to all the LEDs 208, including the one or more red LEDs 208-1, one or more green LEDs 208-1, and one or more blue LEDs 208-3. Based on the driving signal provided by the white flash generation module 114, all the LEDs 208 instantaneously emit light to generate an instantaneous white light.

In one example of the present subject matter, the white flash generation module 114 may actuate the LEDs 208 for a predetermined time period. For instance, in an example, the white flash generation module 114 may actuate the LEDs 208 for the predetermined time period of 5 seconds. In another example, the white flash generation module 114 may actuate the LEDs 208 for the predetermined time period of 10 seconds. Therefore, the predetermined time period may vary from configuration to configuration and can be modified by the user of the projection system 100.

In another example implementation of the present subject matter, the white flash generation module 114 may generate strobes of white light during the white-light mode of projection. It would be noted that the strobes of white light may include light patterns where the LEDs 208 are in an 'On' state for a certain time period and are in an 'Off' state for another time period. For example, the white flash generation module 114 may generate a strobe of white light where the LEDs 208 are actuated and put in 'On' state for 3 seconds and thereafter are put in 'Off' state for 1 second. Such sequence of 'On' and 'Off' states of the LEDs 208 may be repeated by the white flash generation module 114 for the predetermined time period to generate the strobe of white light in the white-light mode of projection.

The time period of the 'On' state and the 'Off' state of the LEDs 208 may be identified by the white flash generation module 114 based on predefined strobe parameters. The predefined strobe parameters may define time periods of the 'On' state and 'Off' state of the LEDs 208, and may also define the predefined time period for which the pattern of 'On' state and 'Off' state may be carried out.

The white flash generation module 114 switches the LED projector 102 from the white-light mode of projection to its previous projection mode. The switching is initiated by the white flash generation module 114 after the expiry of the predetermined time period. The switching is initiated based on the predetermined time period, the white flash generation module 114 may monitor the time lapsed since the LED projector 102 was switched to the white-light mode of projection. Upon expiry of the predetermined time period, the white flash generation module 114 may switch the LED projector back to the previous projection mode.

For instance, if the LED projector 102 is operating in a first projection mode and the white flash generation module 114 has switched the LED projector 102 to the white-light mode of projection for the predetermined time period of 10 seconds, upon expiry of 10 seconds, the white flash generation module 114 may switch the LED projector 102 back to the first projection mode. As described earlier, it would be noted that the predetermined time period may either be hardwired into the white flash generation module 114, or may be configured by different users based on different configurations.

In one example not part of the invention, the white flash generation module 114 may also switch the LED projector 102 back to the earlier projection mode from the white-light mode of projection upon occurrence of a trigger. The trigger may either be an external input from the user of the projection system 100, or may be an occurrence of a preconfigured event.

The user may provide an input in different ways such as by press of a defined button, or by making a predefined gesture either in the section 118, or on the surface 108. For example, the user may double tab onto the surface 108 which may be a touch sensitive surface. Similarly, the user may wave in a predefined manner within the section 118 which may be analyzed by the sensors along with the image capturing device 112. As described earlier, the computing system 104 may receive such inputs from the user and may provide them to the white flash generation module 114 of the LED projector 102.

In some examples not part of the invention, the white flash generation module 114 may switch the LED projector 102 back to the previous projection mode based on occurrence of the preconfigured event. The, preconfigured event include situations, such as completion of operation of the image capturing device 112, occurrence of a slide in a presentation being executed on the computing system 104 and being projected by the LED projector 102.

Accordingly, the white flash generation module 114 of the LED projector 102 may generate white flash of light and allow the image capturing device 112 to capture images and videos without any rainbow or gray scale artifacts.

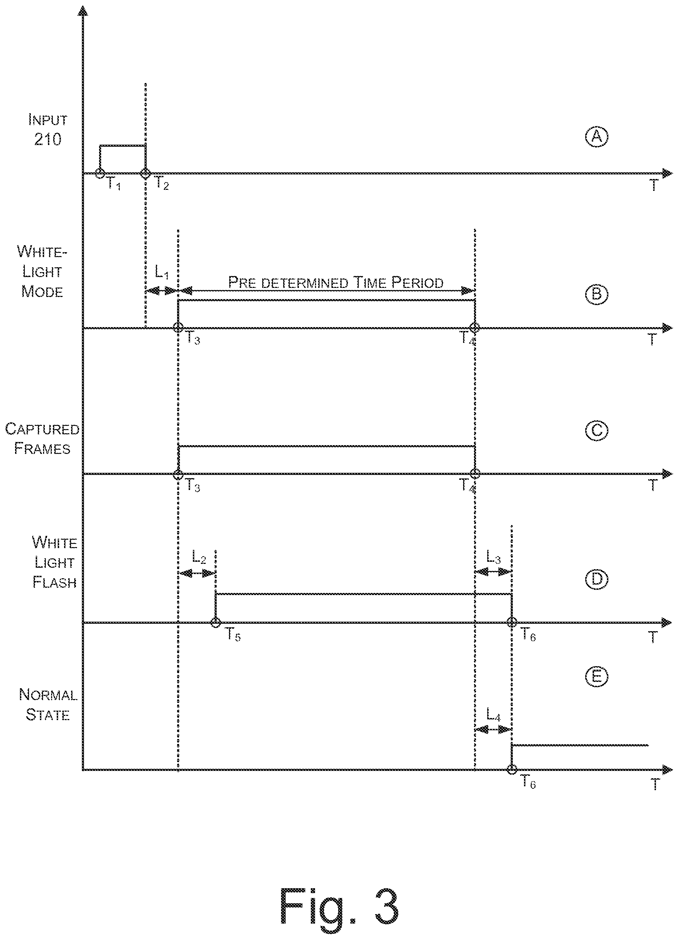

Fig. 3 graphically illustrates signal analysis of the LED projector 102 while operating in the white-light mode of projection, according to an example of the present subject matter. Different graphs including 'A', 'B', 'C', 'D', and 'E' represent different signals where the 'X' axis of the graphs represents time while the 'Y' axis of the graphs represent amplitude of the represented signal. It would be appreciated that 'Y' axis of the graphs may either represent voltage signals, or may represent current signals, depending upon the implementation of the LED projector 102.

Referring to graph 'A' in Fig. 3, the 'X' axis of the graph may represent the input signal. As described before, the input signal may either be directly received by the LED projector 102, or may be provided by the computing system 104. The input signal may be received at time instance T₁ and may extend up to time instance T₂. Although the signal has been shown to be a square wave, it would be noted that the signal may include rising and falling edges due to which some latency may be induced.

Upon receiving the input, the LED projector 102 may switch to the white-light mode of projection for generation of the white flash. Graph 'B' represents the white-light mode of projection for the LED projector 102. In one example, the white flash generation module 114 may switch the LED projector into the white-light mode of projection after time instance T₂. Considering some latency delay L₁, either due to falling edge of the input signal or due to communication delay in transmission, the switching to the white-light mode of projection may initiate at time instance T₃.

As described earlier, the white-light mode of projection is switched back to the earlier projection mode by the white flash generation module 114, after a predetermined time period. In one example, the LED projector 102 may remain in the white-light mode of projection up to time instance T₄ and may then be switched to an earlier projection mode. Accordingly, the white-light mode may terminate after the predetermined time period at time instance T₄.

As would be noted, the time duration during which the image capturing device 112 may capture images or video may be the predetermined time period during which LED projector 102 is in the white-light mode of projection. Accordingly, in said example and as depicted in graph 'C', the image capturing device 112 may capture images or video for the predetermined time period between T₃ and T₄.

In the white light of projection, the white flash generation module 114 actuates all the LEDs 208. Graph 'D' represents a LED actuation signal provided by the white flash generation module 114 to all the LEDs 208. In one example, the white flash generation module 114 may send the signal to actuate all the LEDs 208 after time instance T₃. Considering some latency delay L₂, either due to delay in detection of the rising edge of the white-light mode signal, the signal to actuate the LEDs 208 may be initiated at time instance T₅. Upon identifying the switching of the LED projector 102 from the white-light mode to other projection mode at time instance T₄, the white light flash may be stopped. Due to some delay in detecting the signals and due to other communication delays, the white flash may stop at time instance T₆, after a latency delay L₃ from the time instance T₄.

Once the LED projector 102 is successfully switched from white-light mode of projection to other projection mode, the LED projector 102 again operate as it was operating in its previous projection mode. As discussed above, the normal state may be regained by the LED projector 102 after a delay latency of L₄ due to delay in detecting the signals, or due to other communication delays.

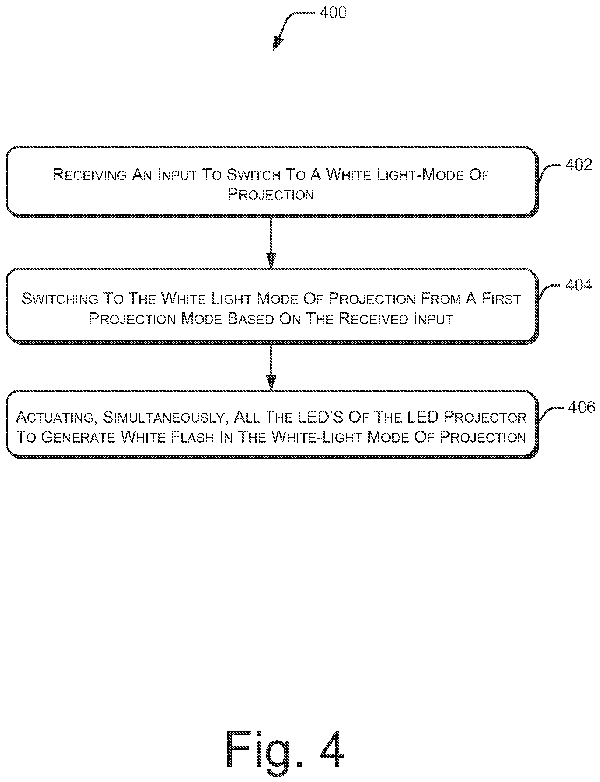

Fig. 4 illustrates a method 400 for generating white flash from a LED projector coupled with a computing system, according to an example of the present subject matter. The method 400 may be implemented by the LED projector 102 through any suitable hardware components, non-transitory machine readable instructions, or combination thereof.

It may be understood that steps of the method 400 may be performed by programmed LED projector. The steps of the method 400 may be executed based on instructions stored in a non-transitory computer readable medium, as will be readily understood. The non-transitory computer readable medium may include, for example, digital memories, magnetic storage media, such as one or more magnetic disks and magnetic tapes, hard drives, or optically readable digital data storage media.

Further, although the method 400 may be implemented in a variety of projection systems; in an example described in Fig. 4, the method 400 is explained in context of the aforementioned projection system 100.

Referring to Fig. 4, in an example of the present subject matter, at block 402, an input may be received to switch the LED projector to a white-light mode of projection. In one example implementation, the input may either be a direct user input, received directly from the user through a press of a button, or may be an indirect input, indirectly received through a computing system. In situations where the input is received through the computing system, the computing system may first receive the input from the user through one or different input devices, such as touch surface; and may provide it to the LED projector.

At block 404, the LED projector is switched to a white-light mode of projection, in response to the received input. The LED projector is switched from a first projection mode to the white-light mode of projection to generate white flash of light. An image capturing device of the computing system is actuated in the white-light mode of projection to capture images or video of objects placed on projection surface of the LED projector.

At block 406, the LEDs of the LED projector are simultaneously actuated to generate a white flash. It would be noted that the LED projector includes red, green, and blue LEDs. The actuation of all the LEDs simultaneously generates instantaneous white light in the white-light mode of projection.

The generation of white flash projects an instantaneous white light onto the projection surface such that the image capturing device may capture images free from any rainbow or gray scale artifacts.

Although implementations of present subject matter have been described in language specific to structural features and/or methods, it is to be understood that the present subject matter is not necessarily limited to the specific features or methods described. Rather, the specific features and methods are disclosed and explained in the context of a few example implementations for projection systems. The scope of protection is defined by the claims.

## Claims

1. A method for generating white flash from a LED projector (102) coupled to a computing system (104), the LED projector (102) comprising at least one red LED, at least one green LED and at least one blue LED, the method comprising:
receiving an input to switch projection mode of the LED projector (102) to a white-light mode of projection, wherein the input is one of a direct user input and an indirect input;
operating the LED projector (102) in a first projection mode in which at least one red LED, at least one green LED and at least one blue LED are actuated in a sequential pattern to project images onto a projection surface (108);
switching the LED projector (102) to the white-light mode of projection from the first projection mode based on the received input, wherein the LED projector (102) operates on one or more projection modes;
actuating, simultaneously, all LEDs of the LED projector (102), including the at least one red LED, at least one green LED and at least one blue LED, to generate a white flash of light in the white-light mode of projection, thereby illuminating the projection surface (108) or an object on the projection surface (108);
an image capturing device (112) coupled to the computing system (104) capturing an image of the projection surface (108) or an image of the object on the projection surface (108) during the white-light mode of projection;
and
switching the LED projector (102) back to the first projection mode from the white-light mode of projection after a predetermined time period.

2. The method as claimed in claim 1, wherein the indirect input is received through the computing system (104), and wherein the computing system (104) receives the indirect input through a touch gesture made by the user on a projection surface (108) of the LED projector (102).

3. The method as claimed in claim 1, wherein the white flash of light is generated in a pattern to form strobes of white light, wherein the pattern is based on predefined strobe parameters.

4. A projection system (100) for generation of white flash from a LED projector (102), the projection system (100) comprising:
a computing system (104);
the LED projector (102) coupled to the computing system (104);
a projection surface (108); and
an image capturing device (112) coupled to the computing system (104);
wherein the LED projector (102) comprises at least one red LED, at least one green LED, at least one blue LED, and a white flash generation module (114) to:
receive an input from the computing system (104) to switch projection mode of the LED projector (102) to a white-light mode of projection;
operate the LED projector (102) in a first projection mode in which at least one red LED, at least one green LED and at least one blue LED are actuated in a sequential pattern to project an image onto the projection surface (108);
switch the LED projector (102) to the white-light mode of projection from the first projection mode based on the received input, wherein the LED projector (102) operates on a plurality of projection modes;
actuate, simultaneously, all LEDs of the LED projector (102), including the at least one red LED, at least one green LED and at least one blue LED, to generate a white flash of light in the white-light mode of projection, thereby illuminating the projection surface (108) or an object on the projection surface (108); and
switch the LED projector (102) back to the first projection mode from the white-light mode of projection after a predetermined time period; and
wherein the image capturing device (112) is to capture an image of the projection surface (108) or an image of the object on the projection surface (108) during the white-light mode of projection.

5. The projection system (100) as claimed in claim 4, wherein actuation of all the LEDs in the white-light mode of projection is to generate an increased illuminance of projected light by the LED projector (102) in comparison to the illuminance of projected light by the LED projector (102) in the first projection mode.

6. The projection system (100) as claimed in claim 4, wherein the projection surface (108) is one of a passive projection surface and an active projection surface to receive the input.

## Patentansprüche

1. Verfahren zum Erzeugen von weißem Blitz von einem LED-Projektor (102), der mit einem Rechensystem (104) gekoppelt ist, wobei der LED-Projektor (102) wenigstens eine rote LED, wenigstens eine grüne LED und wenigstens eine blaue LED umfasst, wobei das Verfahren Folgendes umfasst:
Empfangen einer Eingabe, um den Projektionsmodus des LED-Projektors (102) in einen Weißlicht-Projektionsmodus umzuschalten, wobei die Eingabe eine direkte Benutzereingabe oder eine indirekte Eingabe ist;
Betreiben des LED-Projektors (102) in einem ersten Projektionsmodus, in dem wenigstens eine rote LED, wenigstens eine grüne LED und wenigstens eine blaue LED in einem sequentiellen Muster betätigt werden, um Bilder auf eine Projektionsoberfläche (108) zu projizieren;
Umschalten des LED-Projektors (102) in den Weißlicht-Projektionsmodus aus dem ersten Projektionsmodus auf der Basis der empfangenen Eingabe, wobei der LED-Projektor (102) in einem oder mehreren Projektionsmodi in Betrieb ist;
gleichzeitiges Betätigen aller LEDs des LED-Projektors (102), einschließlich der wenigstens einen roten LED, wenigstens einen grünen LED und wenigstens einen blauen LED, um in dem Weißlicht-Projektionsmodus einen weißen Lichtblitz zu erzeugen, wodurch die Projektionsoberfläche (108) oder ein Objekt auf der Projektionsoberfläche (108) beleuchtet wird;
eine Bilderfassungsvorrichtung (112), die mit dem Rechensystem (104) gekoppelt ist, die ein Bild der Projektionsoberfläche (108) oder ein Bild des Objekts auf der Projektionsoberfläche (108) während des Weißlicht-Projektionsmodus erfasst;
und
Zurückschalten des LED-Projektors (102) aus dem Weißlicht-Projektionsmodus in den ersten Projektionsmodus nach einer zuvor bestimmten Zeitdauer.

2. Verfahren nach Anspruch 1, wobei die indirekte Eingabe über das Rechensystem (104) empfangen wird und wobei das Rechensystem (104) die indirekte Eingabe über eine Berührungsgeste des Benutzers auf einer Projektionsoberfläche (108) des LED-Projektors (102) empfängt.

3. Verfahren nach Anspruch 1, wobei der weiße Lichtblitz in einem Muster erzeugt wird, um Stroboskope aus weißem Licht auszubilden, wobei das Muster auf vordefinierten Stroboskopparametern basiert.

4. Projektionssystem (100) für die Erzeugung von weißem Blitz von einem LED-Projektor (102), wobei das Projektionssystem (100) Folgendes umfasst:
ein Rechensystem (104);
den LED-Projektor (102), der mit dem Rechensystem (104) gekoppelt ist;
eine Projektionsoberfläche (108); und
eine Bilderfassungsvorrichtung (112), die mit dem Rechensystem (104) gekoppelt ist;
wobei der LED-Projektor (102) wenigstens eine rote LED, wenigstens eine grüne LED, wenigstens eine blaue LED und ein weißes Blitzerzeugungsmodul (114) umfasst, um Folgendes durchzuführen:
Empfangen einer Eingabe von dem Rechensystem (104), um den Projektionsmodus des LED-Projektors (102) in einen Weißlicht-Projektionsmodus umzuschalten;
Betreiben des LED-Projektors (102) in einem ersten Projektionsmodus, in dem wenigstens eine rote LED, wenigstens eine grüne LED und wenigstens eine blaue LED in einem sequentiellen Muster betätigt werden, um ein Bild auf die Projektionsoberfläche (108) zu projizieren;
Umschalten des LED-Projektors (102) in den Weißlicht-Projektionsmodus aus dem ersten Projektionsmodus auf der Basis der empfangenen Eingabe, wobei der LED-Projektor (102) in mehreren Projektionsmodi in Betrieb ist;
gleichzeitiges Betätigen aller LEDs des LED-Projektors (102), einschließlich der wenigstens einen roten LED, wenigstens einen grünen LED und wenigstens einen blauen LED, um in dem Weißlicht-Projektionsmodus einen weißen Lichtblitz zu erzeugen, wodurch die Projektionsoberfläche (108) oder ein Objekt auf der Projektionsoberfläche (108) beleuchtet wird; und
Zurückschalten des LED-Projektors (102) aus dem Weißlicht-Projektionsmodus in den ersten Projektionsmodus nach einer zuvor bestimmten Zeitdauer; und
wobei die Bilderfassungsvorrichtung (112) dazu dient, ein Bild der Projektionsoberfläche (108) oder ein Bild des Objekts auf der Projektionsoberfläche (108) während des Weißlicht-Projektionsmodus zu erfassen.

5. Projektionssystem (100) nach Anspruch 4, wobei die Betätigung aller LEDs in dem Weißlicht-Projektionsmodus dazu dient, eine erhöhte Beleuchtungsstärke von projiziertem Licht durch den LED-Projektor (102) im Vergleich zu der Beleuchtungsstärke von projiziertem Licht durch den LED-Projektor (102) in dem ersten Projektionsmodus zu erzeugen.

6. Projektionssystem (100) nach Anspruch 4, wobei die Projektionsoberfläche (108) eine passive Projektionsoberfläche oder eine aktive Projektionsoberfläche ist, um die Eingabe zu empfangen.

## Revendications

1. Procédé de génération d'un flash blanc à partir d'un projecteur à DEL (102) couplé à un système informatique (104), le projecteur à DEL (102) comprenant au moins une DEL rouge, au moins une DEL verte et au moins une DEL bleue, le procédé comprenant :
la réception d'une entrée pour commuter le mode de projection du projecteur à DEL (102) en un mode de projection de lumière blanche, l'entrée étant une entrée parmi une entrée utilisateur directe et une entrée indirecte ;
le fonctionnement du projecteur à DEL (102) dans un premier mode de projection dans lequel au moins une DEL rouge, au moins une DEL verte et au moins une DEL bleue sont actionnées selon un motif séquentiel pour projeter des images sur une surface de projection (108) ;
la commutation du projecteur à DEL (102) en mode de projection de lumière blanche à partir du premier mode de projection sur la base de l'entrée reçue, le projecteur à DEL (102) fonctionnant sur un ou plusieurs modes de projection ;
l'actionnement, simultanément, de toutes les DEL du projecteur à DEL (102), y compris l'au moins une DEL rouge, au moins une DEL verte et au moins une DEL bleue, pour générer un flash de lumière blanche dans le mode de projection de lumière blanche, éclairant ainsi la surface de projection (108) ou un objet sur la surface de projection (108) ;
un dispositif de capture d'image (112) couplé au système informatique (104) capturant une image de la surface de projection (108) ou une image de l'objet sur la surface de projection (108) pendant le mode de projection de lumière blanche ;
et
la commutation à nouveau du projecteur à DEL (102) en premier mode de projection à partir du mode de projection de lumière blanche après une période prédéterminée.

2. Procédé selon la revendication 1, dans lequel l'entrée indirecte est reçue par l'intermédiaire du système informatique (104), et dans lequel le système informatique (104) reçoit l'entrée indirecte par l'intermédiaire d'un geste tactile effectué par l'utilisateur sur une surface de projection (108) du projecteur à DEL (102).

3. Procédé selon la revendication 1, dans lequel le flash de lumière blanche est généré selon un motif pour former des stroboscopes de lumière blanche, le motif étant basé sur des paramètres stroboscopiques prédéfinis.

4. Système de projection (100) pour la génération d'un flash blanc à partir d'un projecteur à DEL (102), le système de projection (100) comprenant :
un système informatique (104) ;
le projecteur à DEL (102) couplé au système informatique (104) ;
une surface de projection (108) ; et
un dispositif de capture d'image (112) couplé au système informatique (104) ;
dans lequel le projecteur à DEL (102) comprend au moins une DEL rouge, au moins une DEL verte, au moins une DEL bleue et un module de génération de flash blanc (114) pour :
recevoir une entrée du système informatique (104) pour commuter le mode de projection du projecteur à DEL (102) en un mode de projection de lumière blanche ;
faire fonctionner le projecteur à DEL (102) dans un premier mode de projection dans lequel au moins une DEL rouge, au moins une DEL verte et au moins une DEL bleue sont actionnées selon un motif séquentiel pour projeter une image sur la surface de projection (108) ;
commuter le projecteur à DEL (102) en mode de projection de lumière blanche à partir du premier mode de projection sur la base de l'entrée reçue, le projecteur à DEL (102) fonctionnant sur une pluralité de modes de projection ;
actionner, simultanément, toutes les DEL du projecteur à DEL (102), y compris l'au moins une DEL rouge, au moins une DEL verte et au moins une DEL bleue, pour générer un flash de lumière blanche dans le mode de projection de lumière blanche, éclairant ainsi la surface de projection (108) ou un objet sur la surface de projection (108) ; et
commuter à nouveau le projecteur à DEL (102) en premier mode de projection à partir du mode de projection de lumière blanche après une période prédéterminée ; et
dans lequel le dispositif de capture d'image (112) doit capturer une image de la surface de projection (108) ou une image de l'objet sur la surface de projection (108) pendant le mode de projection de lumière blanche.

5. Système de projection (100) selon la revendication 4, dans lequel l'actionnement de toutes les DEL dans le mode de projection de lumière blanche doit générer un éclairement accru de lumière projetée par le projecteur à DEL (102) par rapport à l'éclairement de lumière projetée par le projecteur à DEL (102) dans le premier mode de projection.

6. Système de projection (100) selon la revendication 4, dans lequel la surface de projection (108) est une surface de projection passive et/ou une surface de projection active pour recevoir l'entrée.
